(19)

**Europäisches Patentamt**
**European Patent Office**
**Office européen des brevets**

(11) **EP 4 446 777 B1**

(12) **EUROPEAN PATENT SPECIFICATION**

(45) Date of publication and mention
of the grant of the patent:
**01.07.2026 Bulletin 2026/27**

(51) International Patent Classification (IPC):
*G01S 13/931* (2020.01)  *G01S 13/42* (2006.01)
*G01S 13/58* (2006.01)  *G01S 7/03* (2006.01)
*H01Q 1/32* (2006.01)  *G01S 13/34* (2006.01)
*H01Q 21/06* (2006.01)

(21) Application number: **23167808.7**

(22) Date of filing: **13.04.2023**

(52) Cooperative Patent Classification (CPC):
**G01S 13/931; G01S 7/03; G01S 13/42;**
**G01S 13/584; H01Q 1/3233;** G01S 13/343;
H01Q 21/061

(54) **AN AUTOMOTIVE RADAR TRANCEIVER SYSTEM WITH INCREASED ANGULAR SEPARABILITY**

KRAFTFAHRZEUGRADAR-SENDEEMPFANGSSYSTEM MIT ERHÖHTER
WINKELTRENNBARKEIT

SYSTÈME D'ÉMETTEUR-RÉCEPTEUR RADAR AUTOMOBILE À POUVOIR DE SÉPARATION
ANGULAIRE ACCRU

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**16.10.2024 Bulletin 2024/42**

(73) Proprietor: **Magna Electronics Sweden AB**
**447 37 Vårgårda (SE)**

(72) Inventors:
• **DIAS, Usham**
**560045 Karnataka (IN)**
• **SELVAM, Pannir**
**560045 Karnataka (IN)**

(74) Representative: **Westpatent AB**
**Almekärrsvägen 11**
**443 39 Lerum (SE)**

(56) References cited:
**EP-A1- 4 050 363**

• **USHAM V DIAS: "Extremely Sparse Co-Prime**
**Sensing: Low Latency Estimation is not a Dream**
**but a Reality", ARXIV.ORG, CORNELL**
**UNIVERSITY LIBRARY, 201 OLIN LIBRARY**
**CORNELL UNIVERSITY ITHACA, NY 14853, 23**
**November 2020 (2020-11-23), XP081819340**
• **USHAM V DIAS: "Sub-Nyquist Co-Prime Sensing**
**with Compressed Inter-Element Spacing -- Low**
**Latency Approach", ARXIV.ORG, CORNELL**
**UNIVERSITY LIBRARY, 201 OLIN LIBRARY**
**CORNELL UNIVERSITY ITHACA, NY 14853, 23**
**July 2020 (2020-07-23), XP081725889**
• **QIN SI ET AL: "Generalized Coprime Array**
**Configurations for Direction-of-Arrival**
**Estimation", IEEE TRANSACTIONS ON SIGNAL**
**PROCESSING, IEEE, USA, vol. 63, no. 6, 1 March**
**2015 (2015-03-01), pages 1377 - 1390,**
**XP011573078, ISSN: 1053-587X, [retrieved on**
**20150211], DOI: 10.1109/TSP.2015.2393838**

**Description**

DESCRIPTION OF THE DISCLOSURE

The present disclosure relates to automotive radar systems, and in particular to radar systems comprising antenna arrays adapted for detecting the bearing to one or more targets in terms of azimuth and/or elevation angle, in addition to detecting range and radial velocity.

Automotive radar systems are under constant development. Ever increasing demands on performance metrics such as radar range and angular resolution drives this development. Some modern automotive radar systems are required to be able to separate relatively small objects from each other, such as motorcycles, which are at the same radial range from the radar transceiver and which move with the same radial velocity. This separation of objects requires a radar system which has sufficient performance in terms of azimuth and/or elevation angle separability. A radar system lacking in angle separability performance may not be able to separate two smaller objects from each other, thus risking that higher layer control functions misinterpret the traffic situation, which is undesired.

The ability to separate targets that are close to each other is very important for automotive sensors, e.g., to realize autonomous driving. This is valid for every domain that a sensor can measure, e.g., Range, Doppler, Azimuth and Elevation for a radar sensor, and becomes more and more important to the angle domain. The angular difference that targets can be maximum close together to each other and still be separately seen is called resolution, and an increased resolution in the angle domain is required.

In order to meet the increasing requirements on angular resolution, radar systems based on large antenna arrays can be used, i.e., antenna arrays spanning over a large aperture and comprising a large number of transmit (Tx) and receive (Rx) antenna elements. An antenna aperture can be increased by increasing the inter element distance by some factor to improve the angle resolution.

However, if the highest possible frequency is not spatially sampled at least twice, the Nyquist criterion is not fulfilled. In this case the bearing spectrum is containing grating lobes that can lead to false targets. One way to counteract or at least reduce grating lobes is to have uneven distances between antenna elements. The document "Extremely Sparse Co-Prime Sensing: Low Latency Estimation is not a Dream but a Reality", Department of Electrical Engineering, Indian Institute of Technology Delhi, India, 2020, by Usham V. Dias discloses a generalized coprime array structure. This can be used to achieve larger aperture with fewer antenna elements. Here, a factor can be associated with the coprime numbers and has an option to shift the sub-arrays.

The document USHAM V DIAS: "Sub-Nyquist Co-Prime Sensing with Compressed Inter-Element Spacing -- Low Latency Approach" by Usham V. Dias discloses coprime arrays of the type Coprime Array with Compressed Inter-element Spacing (CACIS), which is characterized by inter-element spacing that could be varied. The closed-form expressions for the weight function (number of samples that contribute to estimate the autocorrelation), and the bias window of the correlogram estimate, which were previously unknown, are here derived.

The document "Generalized Coprime Array Configurations for Direction-of-Arrival Estimation" by Qin Si Et Al. discloses generalizing the coprime array concept with two operations. The first operation is through the compression of the inter-element spacing of one subarray, and the second operation exploits two displaced subarrays.

The document EP 4 050 363 AI discloses a radar-based detection circuit or system with signal reception circuitry to receive reflection signals in response to radar signals transmitted towards objects. The system may include a multi-input multi-output (MIMO) virtual array that may include sparse linear arrays, each being associated with a unique antenna-element spacing from among a set of unique co-prime antenna-element spacing.

There is, however, a need for improvements to achieve an array antenna with an increased grating lobes reduction and a more efficient use of an antenna aperture.

This object is at least in part obtained by a linear radar array antenna comprising at least two superimposed subarray antennas, where each subarray antenna comprises a plurality of antenna elements. For each sub-array antenna *i*, a plurality of antenna elements are positioned in a linear manner defined by

$$d_{ni} = \left(\varepsilon_i \breve{M}_i n + s_i\right)d.$$

Here,

- the subscript *i* denotes subarray antenna *i,* with $i \in [1, q]$, i.e., *i* runs from 1 to q and q is the number of subarray antennas,
- $\varepsilon_i$ is a sparsity factor that can be any positive integer and is used to modify the co-prime locations for the array antenna,
- $\breve{M}_i = \dfrac{M_i}{p_i}$ where $M_i$ is a chosen coprime number that defines subarray interelement spacing, and $p_i$ is a

2

compression factor that relates to Co-Prime Arrays with Compressed Inter-element Spacings, CACIS and $p_i \in [1, M_i]$, such that $\widetilde{M_i}$ is an integer,

- $n$ is an integer value which indicates the antenna elements and starts from zero,
- $d_{ni}$ denotes the position of antenna element $n$ in subarray antenna $i$,
- $d$ is the Nyquist distance, $\frac{\lambda}{2}$ where $\lambda$ is the wavelength for at least one intended frequency, and
- $s_i$ defines a shift distance from a zero reference, being a real number equal to or larger than zero.

For at least one subarray antenna, the shift distance $s_i$ is chosen separate from zero and integers, i.e., chosen to be non-zero and non-integer.

This provides antenna element positions with lower grating lobes and narrow beamwidths, leading to more accurate angle estimations. By choosing the shift distances in an appropriate manner, it can be avoided that antenna elements of the sub-arrays 300, 400 end up on the same position in the resulting linear array antenna 500. This enables more antenna elements to be used in the linear array antenna 500 than presented by prior art.

According to some aspects, for at least one sub-array antenna $i$, the sparsity factor $\varepsilon_i$ equals 1. According to some further aspects, for at least one sub-array antenna $i$, the compression factor $p_i$ equals 1.

In this manner, a simplified expression for the antenna elements is obtained, where the antenna elements are positioned in a linear manner defined by

$$d_{ni} = (M_i n + s_i)d \ .$$

According to some aspects, the antenna positions $d_{ni}$ for the linear array antenna are scaled by a scaling factor $F$ that equals $\dfrac{A}{d_{max}}$, where $A$ denotes a desired antenna aperture and $d_{max}$ denotes the largest value of $d_{ni} \forall i$, i.e., for all the sub-array antennas.

This means that the determined antenna positions $d_{ni}$ for the linear array antenna can be adapted to fit a certain antenna aperture A.

There are also disclosed herein two-dimensional radar array antennas, three-dimensional radar array antennas, radar transceiver arrangements and vehicles associated with the above-mentioned advantages.

BRIEF DESCRIPTION OF THE DRAWINGS

The present disclosure will now be described in detail with reference to the appended drawings, where:

Figure 1A    schematically illustrates a vehicle with a radar sensor;

Figure 1B    schematically illustrates a radar transceiver arrangement;

Figure 2    schematically illustrates a first subarray antenna;

Figure 3    schematically illustrates a second subarray antenna;

Figure 4    schematically illustrates a linear array antenna that is constituted by the first subarray antenna and the second subarray antenna;

Figure 5    schematically illustrates a two-dimensional array antenna; and

Figure 6    schematically illustrates a three-dimensional array antenna.

DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

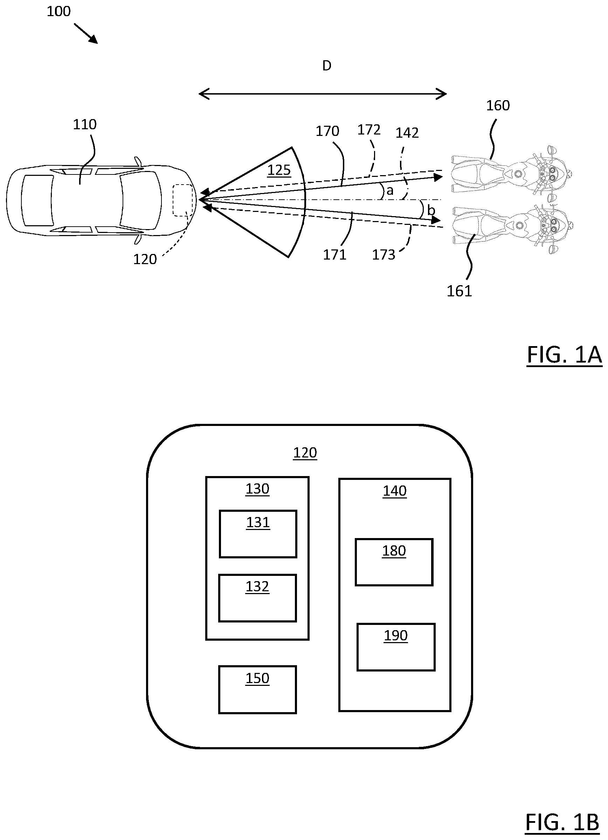

Figure 1A illustrates an example traffic scenario 100 where a vehicle 110 with a radar transceiver arrangement 120 approaches two motorcycles 160, 161. The radar transceiver arrangement 120 is associated with a field of view 125. This example radar transceiver arrangement 120 is a forward-looking radar. The techniques disclosed herein are however not limited to forward looking radar systems but can be used also in corner radars and other types of radar systems.

With reference also to Figure 1B, according to some aspects, the automotive radar transceiver arrangement 120 comprises a radar transceiver 130, an antenna arrangement 140 and a processing device 150. The radar transceiver 130 comprises a transmitter device 131 and a receiver device 132, and the antenna arrangement 140 comprises a transmitter antenna arrangement 180 and a receiver antenna arrangement 190. The transmitter device 131 and the transmitter antenna arrangement 180 are adapted to generate and transmit radar signals 170, 171. The receiver antenna arrangement 190 and the receiver device 132 are adapted to receive the reflected signals 172, 173. The processing device 150 is adapted to process the received reflected radar signals 172, 173.

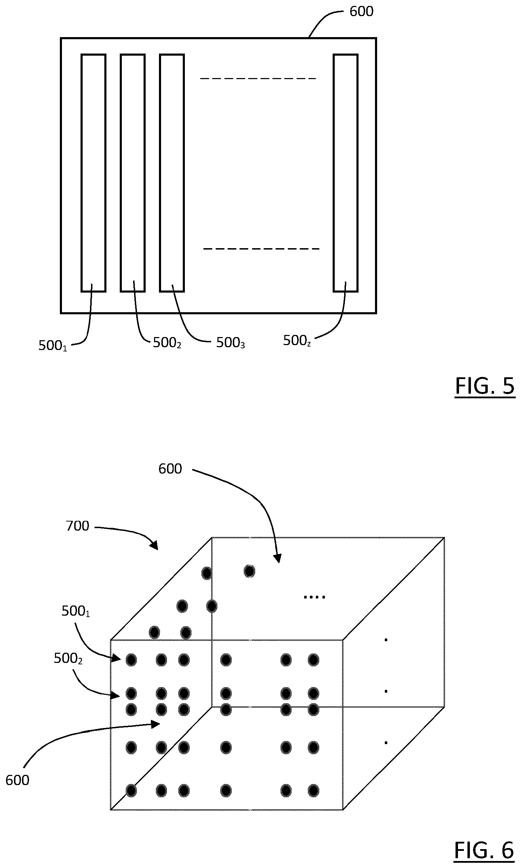

At least one antenna arrangement 180, 190 comprises at least one linear array antenna 500 as schematically illustrated in Figure 5, and which in turn comprises a plurality of antenna elements, where adjacent antenna elements are separated by a corresponding distance as will be discussed more in the following.

According to some aspects, the radar transceiver 130 is arranged to generate a frequency modulated continuous wave (FMCW) radar signal over a radar bandwidth called a chirp, where the frequency is swept over the radar bandwidth within a duration. Other types of radar signal formats may also be used, such as band-spread radar signals where orthogonal codes are used to spread a modulated signal over a wide frequency band, or an orthogonal frequency division multiplexed (OFDM) radar signal.

None of the two motorcycles 160, 161 in the example traffic scenario 100 has a large radar cross section (RCS), and they are located at about the same distance from the radar transceiver arrangement 120. The two motorcycles 160, 161 also move with approximately the same radial velocity with respect to the radar transceiver arrangement 120. Thus, to separate the two target objects 160, 161, it is required to determine target angles a, b, e.g., with respect to a boresight direction 142 in azimuth and or elevation angle. A radar transceiver which does not have the required angle separability performance will see the two target objects 160, 161 as a single target.

A way to obtain an increased angle separability performance is to increase the aperture of the array antenna 140 by increasing the inter element distance by some factor to improve the angle resolution.

However, if the highest possible frequency is not sampled at least twice, the Nyquist criterion is not fulfilled. In this case the bearing spectrum contains grating lobes that can lead to false targets.

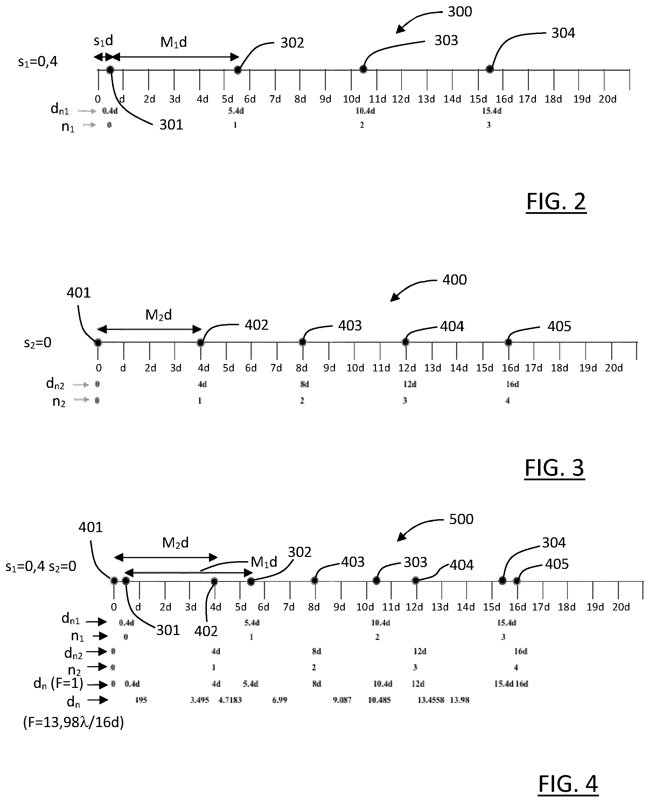

In order to counteract the occurrence of grating lobes, with reference to Figure 2-Figure 4, there is a linear array antenna 500 comprising at least two superimposed subarray antennas 300, 400, each subarray antenna 300, 400 comprising a plurality of antenna elements 301, 302, 303, 304; 401, 402, 403, 404, 405. In this example, there are two superimposed subarray antennas 300, 400.

For each sub-array antenna $i$ 300, 400, a plurality of antenna elements 301, 302, 303, 304; 401, 402, 403, 404, 405 are positioned in a linear manner defined by

$$d_{ni} = \left( \varepsilon_i \tilde{M}_i n + s_i \right) d \mathsf{F}_i . \qquad (1)$$

Here,

- the subscript $i$ denotes subarray antenna $i$ 300, 400, with $i$ runs from 1 to q and q is the number of subarray antennas,
- $\varepsilon_i$ is a sparsity factor that can be any positive integer and is used to modify the co-prime locations for the array antenna 500,
- $\tilde{M}_i = \dfrac{M_i}{p_i}$ where $M_i$ is a chosen coprime number that defines subarray interelement spacing,
- $p_i$ is a compression factor that relates to Co-Prime Arrays with Compressed Inter-element Spacings, CACIS, and $p_i \in [1, M_i]$, such that $\tilde{M}_i$ is an integer,
- $n$ is an integer value which indicates the antenna elements 301, 302, 303, 304; 401, 402, 403, 404, 405 and starts from zero
- $d_{ni}$ denotes the position of antenna element $n$ 301, 302, 303, 304; 401, 402, 403, 404, 405 in subarray antenna $i$ 300, 400,
- $d$ is the Nyquist distance $\dfrac{\lambda}{2}$ where $\lambda$ is the wavelength for at least one intended frequency,
- $F_i$ is a scaling factor, and

**EP 4 446 777 B1**

- $s_i$ defines a shift distance from a zero reference, being a real number equal to or larger than zero.

According to the present disclosure, for at least one subarray antenna 300, the shift distance $s_i$ is chosen separate from zero and integers, i.e., chosen to be non-zero and non-integer.

This provides antenna element positions with lower grating lobes and narrow beamwidths, leading to more accurate angle estimations. By choosing the shift distances in an appropriate manner, it can be avoided that antenna elements of the sub-arrays 300, 400 end up on the same position in the resulting linear array antenna 500. This enables more antenna elements to be used in the linear array antenna 500 than presented by prior art.

According to some aspects, prototype co-prime, uncompressed, array antennas and nested array antennas, fully compressed, are special cases and depend on the compression factor $p_i$.

According to some aspects, for at least one sub-array antenna $i$ 300, 400, the sparsity factor $\varepsilon_i$ equals 1.

According to some aspects, for at least one sub-array antenna $i$ 300, 400, the compression factor $p_i$ equals 1.

This means that the antenna elements 301, 302, 303, 304; 401, 402, 403, 404, 405 are positioned in a linear manner defined by

$$d_{ni} = (M_i n + s_i)d . \qquad (2)$$

According to some aspects, the antenna positions $d_{ni}$ for the linear array antenna 500 are scaled by a scaling factor $F$ that equals $\frac{A}{d_{max}}$, where $A$ denotes a desired antenna aperture and $d_{max}$ denotes the largest value of $d_{ni} \forall i$, i.e., for all the sub-array antennas 300, 400.

This means that the determined antenna positions $d_{ni}$ for the linear array antenna 500 can be adapted to fit a certain antenna aperture A.

In the following, a non-limiting example where two sub-arrays are determined and combined to form linear array antenna will be described. Here, the sparsity factor $\varepsilon_i$ equals 1 and the compression factor $p_i$ equals 1.

Figure 2 shows a schematic representation of a first sub-array antenna 300, i=1, with $M_1$=5 and where $n_1$ runs from 0 to 3. There is a first shift distance $s_1$ = 0,4 which means that a first antenna element 301 on the first sub-array antenna 300 is shifted 0,4d from a zero reference. All the other antenna elements 302, 303, 304 are shifted accordingly such that the inter-element spacing is $M_1 d$=5d.

Figure 3 shows a schematic representation of a second sub-array antenna 400, i=2, with $M_2$=4 and where $n_2$ runs from 0 to 4. There is a second shift distance $s_2$ = 0 which means that a first antenna element 401 on the second sub-array antenna 400 is positioned at the zero reference. All the other antenna elements 402, 403, 404 are shifted accordingly such that the inter-element spacing is $M_{2d}$=4d.

Figure 4 shows a schematic representation of a resulting linear array antenna 500 that is formed by combining the first sub-array antenna 300 and the second sub-array antenna 400. By having a first shift distance $s_1$ that is non-integer and not zero, all the antenna elements 301, 302, 303, 304; 401, 402, 403, 404, 405 have different positions $d_n$ along the linear array antenna 500. In this manner, the linear array antenna 500 comprises nine individual antenna elements 301, 302, 303, 304; 401, 402, 403, 404, 405.

It is also shown how the linear array antenna 500 can be scaled to a certain antenna aperture A. In this case, the antenna aperture A is a one-dimensional measure that in the example is **A=13,98$\lambda$** and $d_{max}$ = 16,0d. This leads to that

$$F = \frac{A}{d_{max}} = \frac{13,98\lambda}{16,0d}$$

that can be applied to the determined antenna element positions $d_n$(F=1) in Figure 4 to provide the scaled antenna element positions $d_n$(F=13,98$\lambda$/16d) in Figure 4.

With renewed reference also to Figure 1A and Figure 1B, the present disclosure also relates to a radar transceiver arrangement 120 that comprises a transmitter device 131 and a transmitter antenna arrangement 180 adapted to generate and transmit radar signals 170, 171. The radar transceiver arrangement 120 further comprises a receiver device 132 and a receiver antenna arrangement adapted to receive reflected signals 172, 173 which have been reflected by one or more target objects 160, 161. At least one antenna arrangement 180, 190 comprises at least one linear array antenna 500 as described herein.

This means that the linear array antenna 500 as described herein can be used for both transmitting antenna arrangements and receiving antenna arrangements, and that several linear array antennas 500, which can be mutually different, can be used to form a two-dimensional array antenna.

With reference to Figure 5, the present disclosure also relates to a two-dimensional array antenna 600 comprising a plurality of linear array antennas $500_1$, $500_2$, $500_3$,...,$500_z$ as described herein. The number of linear array antennas runs from 1 to z.

According to some aspects, the linear array antennas $500_1$, $500_2$, $500_3$,..., $500_z$ are in rows or columns or outer product of linear array antennas $500_i$, $500_j$ to form a two-dimensional array antenna 600 with $i,j \in [1,z]$. In the case of outer product, at least one of the linear array antennas $500_i$, $500_j$ in question should be co-prime.

According to some aspects, at least two array antennas $500_1$, $500_2$, $500_3$,..., $500_z$ comprise antenna elements 301, 302, 303, 304; 401, 402, 403, 404, 405 positioned in mutually different linear manners.

With reference to Figure 6, the present disclosure also relates to a three-dimensional array antenna 700 comprising a plurality of two-dimensional array antennas 600 (only two schematically indicated in Figure 6) as described above.

The present disclosure also relates to a vehicle 110 comprising the radar transceiver arrangement 120 according to the above.

The present disclosure is not limited to the above, but may vary freely within the scope of the appended claims. For example, there can be an arbitrary number of antenna elements in each sub-array antenna, i.e., $n_i$ can be an arbitrary number for at least one i.

By means of the present disclosure, several tuning parameters can be used to achieve the desired performance. According to some aspects, in practice, a lot of parameters are altered until a desired antenna performance is acquired.

## Claims

1. A linear radar array antenna (500) comprising at least two superimposed subarray antennas (300, 400), each subarray antenna (300, 400) comprising a plurality of antenna elements (301, 302, 303, 304; 401, 402, 403, 404, 405), where, for each sub-array antenna $i$ (300, 400), a plurality of antenna elements (301, 302, 303, 304; 401, 402, 403, 404, 405) are positioned in a linear manner defined by

$$d_{ni} = \left(\varepsilon_i \breve{M}_i n + s_i\right)d,$$

where

- the subscript $i$ denotes subarray antenna $i$ (300, 400), with $i \in [1,q]$, i.e., $i$ runs from 1 to $q$ and $q$ is the number of subarray antennas,
- $\varepsilon_i$ is a sparsity factor that can be any positive integer and is used to modify the co-prime locations for the array antenna (500),
- $\breve{M}_i = \dfrac{M_i}{p_i}$ where $M_i$ is a chosen coprime number that defines subarray interelement spacing, and $p_i$ is a compression factor that relates to Co-Prime Arrays with Compressed Inter-element Spacings, CACIS and $p_i \in [1, M_i]$, such that $\breve{M}_i$ is an integer,
- $n$ is an integer value which indicates the antenna elements (301, 302, 303, 304; 401, 402, 403, 404, 405) and starts from zero,
- $d_{ni}$ denotes the position of antenna element $n$ (301, 302, 303, 304; 401, 402, 403, 404, 405) in subarray antenna $i$ (300, 400),
- $d$ is the Nyquist distance, $\dfrac{\lambda}{2}$ where $\lambda$ is the wavelength for at least one intended frequency, and
- $s_i$ defines a shift distance from a zero reference, being a real number equal to or larger than zero,

**characterized in that** for at least one subarray antenna (300), the shift distance $s_i$ is chosen separate from zero and integers, i.e., chosen to be non-zero and non-integer.

2. The linear array antenna (500) according to claim 1, wherein, for at least one sub-array antenna $i$ (300, 400), the sparsity factor $\varepsilon_i$ equals 1.

3. The linear array antenna (500) according to any one of the claims 1 or 2, wherein, for at least one sub-array antenna $i$ (300, 400), the compression factor $p_i$ equals 1.

4. The linear array antenna (500) according to any one of the previous claims, wherein the antenna positions $d_{ni}$ for the

linear array antenna (500) are scaled by a scaling factor $F$ that equals $\frac{A}{d_{max}}$, where $A$ denotes a desired antenna aperture and $d_{max}$ denotes the largest value of $d_{ni} \, \forall \, i$, i.e., for all the sub-array antennas (300, 400).

5. A two-dimensional radar array antenna (600) comprising a plurality of linear array antennas ($500_1$, $500_2$, $500_3$,...,$500_z$) according to any one of the previous claims.

6. The two-dimensional array antenna (600) according to claim 5, where the linear array antennas ($500_1$, $500_2$, $500_3$,..., $500_z$) are in rows or columns or outer product of linear array antennas ($500_i$, $500_j$) to form a two-dimensional array antenna (600) with $i,j \in [1,z]$.

7. The two-dimensional array antenna (600) according to any one of the claims 5 or 6, where at least two array antennas ($500_1$, $500_2$, $500_3$,...,$500_z$) comprise antenna elements (301, 302, 303, 304; 401, 402, 403, 404, 405) positioned in mutually different linear manners.

8. A three-dimensional radar array antenna (700) comprising a plurality of two-dimensional array antennas (600) according to any one of the claims 5-7.

9. A radar transceiver arrangement (120) comprising a transmitter device (131) and a transmitter antenna arrangement (180) adapted to generate and transmit radar signals (170, 171), where the radar transceiver arrangement (120) further comprises a receiver device 132 and a receiver antenna arrangement (190) adapted to receive the reflected signals (172, 173), wherein at least one antenna arrangement (180, 190) comprises at least one linear array antenna (500) according to any one of the previous claims 1-4.

10. A vehicle (110) comprising the radar transceiver arrangement (120) according to claim 9.

**Patentansprüche**

1. Lineare Array-Radarantenne (500), umfassend mindestens zwei überlagerte Teilarray-Antennen (300, 400), jede Teilarray-Antenne (300, 400) umfassend eine Vielzahl von Antennenelementen (301, 302, 303, 304; 401, 402, 403, 404, 405), wobei für jede Teilarray-Antenne $i$ (300, 400) eine Vielzahl von Antennenelementen (301, 302, 303, 304; 401, 402, 403, 404, 405) in einer linearen Art positioniert sind, die definiert ist durch

$$d_{ni} = \left( \varepsilon_i \breve{M}_i n + s_i \right) d,$$

wobei

- der Index $i$ Teilarray-Antenne $i$ (300, 400) bezeichnet, wobei $i \in [1,q]$, d.h., $i$ von 1 bis q läuft und q die Anzahl der Teilarray-Antennen ist,
- $\varepsilon_i$ ein Spärlichkeitsfaktor ist, der eine beliebige positive ganze Zahl sein kann und verwendet wird, um die teilerfremden Standorte für die Array-Antenne (500) zu modifizieren,
- $\breve{M}_i = \frac{M_i}{p_i}$ wobei $M_i$ eine gewählte teilerfremde Zahl ist, die eine Teilarray-Zwischenelementbeabstandung definiert, und $p_i$ ein Kompressionsfaktor ist, der teilerfremde Arrays mit komprimierten Zwischenelementbeabstandungen, CACIS, betrifft, und $p_i \in [1, M_i]$, derart, dass $\widetilde{M_t}$ eine ganze Zahl ist,
- $n$ ein ganzzahliger Wert ist, der die Antennenelemente (301, 302, 303, 304; 401, 402, 403, 404, 405) angibt und bei null beginnt,
- $d_{ni}$ die Position des Antennenelements $n$ (301, 302, 303, 304; 401, 402, 403, 404, 405) in der Teilarray-Antenne $i$ (300, 400) bezeichnet,
- $d$ die Nyquist-Distanz $\frac{\lambda}{2}$ ist, wobei $\lambda$ die Wellenlänge für mindestens eine beabsichtigte Frequenz ist, und
- $s_i$ eine Verschiebungsdistanz von einem Nullbezugspunkt definiert, die eine reelle Zahl gleich oder größer als null ist,

**dadurch gekennzeichnet, dass** für mindestens eine Teilarray-Antenne (300) die Verschiebungsdistanz $s_i$ von null und ganzen Zahlen separat gewählt wird, d.h. als ungleich null und nichtganzzahlig gewählt wird.

2. Lineare Array-Antenne (500) nach Anspruch 1, wobei für mindestens eine Teilarray-Antenne $i$ (300, 400) der Spärlichkeitsfaktor $\varepsilon_i$ gleich 1 ist.

3. Lineare Array-Antenne (500) nach einem der Ansprüche 1 oder 2, wobei für mindestens eine Teilarray-Antenne $i$ (300, 400) der Kompressionsfaktor $p_i$ gleich 1 ist.

4. Lineare Array-Antenne (500) nach einem der vorstehenden Ansprüche, wobei die Antennenpositionen $d_{ni}$ für die lineare Array-Antenne (500) durch einen Skalierungsfaktor $F$ skaliert werden, der gleich $\frac{A}{d_{max}}$ , ist, wobei A eine gewünschte Antennenapertur bezeichnet und $d_{max}$ den größten Wert von $d_{ni}$ V $i$, d.h. für alle der Teilarray-Antennen (300, 400), bezeichnet.

5. Zweidimensionale Array-Radarantenne (600), umfassend eine Vielzahl von linearen Array-Antennen ($500_1$, $500_2$, $500_3$, ..., $500_z$) nach einem der vorstehenden Ansprüche.

6. Zweidimensionale Array-Antenne (600) nach Anspruch 5, wobei die linearen Array-Antennen ($500_1$, $500_2$, $500_3$, ..., $500_z$) in Zeilen oder Spalten oder als ein äußeres Produkt linearer Array-Antennen ($500_i$, $500_j$) vorliegen, um eine zweidimensionale Array-Antenne (600) mit $i, j \in [1, z]$ auszubilden.

7. Zweidimensionale Array-Antenne (600) nach einem der Ansprüche 5 oder 6, wobei mindestens zwei Array-Antennen ($500_1$, $500_2$, $500_3$, ..., $500_z$) Antennenelemente (301, 302, 303, 304; 401, 402, 403, 404, 405) umfassen, die in voneinander unterschiedlichen linearen Arten positioniert sind.

8. Dreidimensionale Array-Radarantenne (700), umfassend eine Vielzahl von zweidimensionalen Array-Antennen (600) nach einem der Ansprüche 5 bis 7.

9. Radar-Transceiver-Anordnung (120), umfassend eine Sendevorrichtung (131) und eine Sendeantennenanordnung (180), die angepasst ist, um Radarsignale (170, 171) zu erzeugen und zu senden, wobei die Radar-Transceiver-Anordnung (120) ferner eine Empfangsvorrichtung (132) und eine Empfangsantennenanordnung (190) umfasst, die angepasst ist, um die reflektierten Signale (172, 173) zu empfangen, wobei mindestens eine Antennenanordnung (180, 190) mindestens eine lineare Array-Antenne (500) nach einem der vorstehenden Ansprüche 1 bis 4 umfasst.

10. Fahrzeug (110), umfassend die Radar-Transceiver-Anordnung (120) nach Anspruch 9.

## Revendications

1. Antenne réseau radar linéaire (500) comprenant au moins deux sous-réseaux d'antennes (300, 400) superposés, chaque sous-réseau d'antennes (300, 400) comprenant une pluralité d'éléments

d'antenne (301, 302, 303, 304 ; 401, 402, 403, 404, 405), où, pour chaque sous-réseau d'antennes $i$ (300, 400), une pluralité d'éléments
d'antenne (301, 302, 303, 304 ; 401, 402, 403, 404, 405) sont positionnés de manière linéaire définie par

$$d_{ni} = \left(\varepsilon_i \breve{M}_i n + s_i\right)d,$$

où

- l'indice $i$ désigne un sous-réseau d'antennes $i$ (300, 400), avec $i \in [1, q]$, c'est-à-dire $i$ va de 1 à $q$ et $q$ est le nombre de sous-réseaux d'antennes,
- $\varepsilon_i$, est un facteur de parcimonie qui peut être n'importe quel nombre entier positif et est utilisé pour modifier les emplacements premiers entre eux pour l'antenne réseau (500),
- $\breve{M}_i = \dfrac{M_i}{p_i}$ où $M_i$ est un nombre premier entre eux choisi qui définit un espacement inter-éléments de

sous-réseau, et $p_i$ est un facteur de compression qui se rapporte aux réseaux premiers entre eux avec des espacements inter-éléments comprimés, CACIS et $p_i \in [1, M_i]$, de telle sorte que $\breve{M_i}$ est un nombre entier,
- $n$ est un chiffre entier qui indique les éléments d'antenne (301, 302, 303, 304 ; 401, 402, 403, 404, 405) et part de zéro,
- $d_{ni}$ désigne la position d'un élément d'antenne

$n$ (301, 302, 303, 304 ; 401, 402, 403, 404, 405) dans un sous-réseau d'antennes $i$ (300, 400),

- $d$ est la distance de Nyquist, $\frac{\lambda}{2}$ où $\lambda$ est la longueur d'onde pour au moins une fréquence prévue, et

- $s_i$ définit une distance de décalage à partir d'une référence nulle, étant un nombre réel égal ou supérieur à zéro,

**caractérisée en ce que** pour au moins un sous-réseau d'antennes (300), la distance de décalage $s_i$ est choisie comme étant distincte de zéro et de nombres entiers, c'est-à-dire choisie pour être non nulle et non entière.

2. Antenne réseau linéaire (500) selon la revendication 1, dans laquelle, pour au moins un sous-réseau d'antennes $i$ (300, 400), le facteur de parcimonie $\varepsilon_i$ est égal à 1.

3. Antenne réseau linéaire (500) selon l'une quelconque des revendications 1 ou 2, dans laquelle, pour au moins un sous-réseau d'antennes $i$ (300, 400), le facteur de compression $p_i$ est égal à 1.

4. Antenne réseau linéaire (500) selon l'une quelconque des revendications précédentes, dans laquelle les positions d'antenne $d_{ni}$ pour l'antenne réseau linéaire (500) sont mises à l'échelle par un facteur d'échelle $F$ qui est égal à $\frac{A}{d_{max}}$, où $A$ désigne une ouverture d'antenne souhaitée et $d_{max}$ désigne la plus grande valeur de $d_{ni} \forall i$, c'est-à-dire pour tous les sous-réseaux d'antennes (300, 400).

5. Antenne réseau radar bidimensionnelle (600) comprenant une pluralité d'antennes réseau linéaires ($500_1$, $500_2$, $500_3$,..., $500_z$) selon l'une quelconque des revendications précédentes.

6. Antenne réseau bidimensionnelle (600) selon la revendication 5, où les antennes réseau linéaires ($500_1$, $500_2$, $500_3$,..., $500_z$) sont en rangées ou en colonnes ou en produit extérieur d'antennes réseaux linéaires ($500_i$, $500_j$) pour former une antenne réseau bidimensionnelle (600) avec $i,j \in [1, z]$.

7. Antenne réseau bidimensionnelle (600) selon l'une quelconque des revendications 5 ou 6, dans laquelle au moins deux antennes réseau ($500_1$, $500_2$, $500_3$,..., $500_z$) comprennent des éléments d'antenne (301, 302, 303, 304 ; 401, 402, 403, 404, 405) positionnés de manières linéaires mutuellement différentes.

8. Antenne réseau radar tridimensionnelle (700) comprenant une pluralité d'antennes réseau bidimensionnelles (600) selon l'une quelconque des revendications 5 à 7.

9. Agencement émetteur-récepteur radar (120) comprenant un dispositif d'émission (131) et un agencement d'antenne d'émission (180) adapté pour générer et émettre des signaux radar (170, 171), où l'agencement émetteur-récepteur radar (120) comprend en outre un dispositif de réception 132 et un agencement d'antenne de réception (190) adapté pour recevoir les signaux réfléchis (172, 173), dans lequel au moins un agencement d'antenne (180, 190) comprend au moins une antenne réseau linéaire (500) selon l'une quelconque des revendications précédentes 1 à 4.

10. Véhicule (110) comprenant l'agencement émetteur-récepteur radar (120) selon la revendication 9.

100

D

110

160

170  172  142

125

a

b

120

171  173

161

FIG. 1A

120

130

131

132

140

180

190

150

FIG. 1B

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4050363 A

**Non-patent literature cited in the description**

- **USHAM V. DIAS**. Extremely Sparse Co-Prime Sensing: Low Latency Estimation is not a Dream but a Reality. Department of Electrical Engineering, Indian Institute of Technology Delhi, 2020
- **USHAM V. DIAS**. *Sub-Nyquist Co-Prime Sensing with Compressed Inter-Element Spacing -- Low Latency Approach*
- **QIN SI**. *Generalized Coprime Array Configurations for Direction-of-Arrival Estimation*